# EUROPEAN PATENT SPECIFICATION

(11) **EP 3 660 289 B1**
(45) Date of publication and mention of the grant of the patent: **15.12.2021**
(21) Application number: 18382877.1
(22) Date of filing: 30.11.2018
(51) Int. Cl.: F01N 5/02, F01N 13/18, F01N 3/02

(54) **HEAT RECOVERY SYSTEM**
WÄRMERÜCKGEWINNUNGSSYSTEM
SYSTEME DE RECUPERATION DE CHALEUR

(43) Date of publication of application: 03.06.2020
(73) Proprietor: BORGWARNER EMISSIONS SYSTEMS SPAIN, S.L.U., 36315 Vigo Pontevedra (ES)
(72) Inventor: HERMIDA DOMÍNGUEZ, Xoan Xosé, 36315 Vigo - Pontevedra (ES); LAGÜELA LÓPEZ, Marta, 36315 Vigo - Pontevedra (ES); LORENZO GONZÁLEZ, Manuel, 36315 Vigo - Pontevedra (ES); VIDAL GARCÍA, Ignacio, 36315 Vigo - Pontevedra (ES); TENIENTE MOLINOS, Jorge, 36315 Vigo - Pontevedra (ES)
(74) Representative: ABG Intellectual Property Law, S.L.

(56) References cited:
- EP-A2- 1 884 634
- DE-A1-102010 011 472
- JP-A- 2010 031 669
- US-A1- 2012 222 838

## Description

### Object of the Invention

The present invention relates to a heat recovery system comprising a device which allows the connection between the elements of said system, such as a heat exchanger and an actuator controlling a valve of the present system. Said actuator is in turn configured such that its operation depends on the behavior of a substance due to the action of the temperature of a fluid, for example the liquid coolant used in the heat exchanger of the system, wherein said heat exchanger is arranged in an exhaust duct of an internal combustion engine.

Additionally, the invention also relates to a method of assembly of a system having these features.

### Background of the Invention

One of the fields of the art that has been subjected to the most intensive development is the field of heat recovery systems in vehicles with an internal combustion engine.

In particular, said heat recovery systems are configured with the attachment of different elements, such as a heat exchanger, an exhaust duct, and a valve, allowing the heat recovery device, depending on the position of said valve, to heat the coolant of the internal combustion engine, or not, by the action of the exhaust gas. An actuator, also comprised in the heat recovery system, allows control over the valve.

The attachments between different elements of the system, particularly between the heat exchanger and the actuator, are established today by means of connections involving additional parts, for example flexible tubing, metal tubing, or independent manifolds, which do allow the fluid attachment between elements but in turn entail complex connections.

These complex attachments entail various drawbacks, such as the presence of additional parts occupying a larger space, the possibility of leakage in the connections between parts, and the risk of requiring higher assembly tolerances that do not allow suitable fitting between parts.

The present invention solves these problems by proposing a system provided with a coupling device which allows a more compact and robust attachment of the elements of said heat recovery system, thereby preventing possible fluid leakage and providing better assembly tolerances.

Additionally, the method of assembly also object of the present invention allows obtaining a heat recovery system having these features.

Document US 2012/0222838 A1 discloses an exhaust heat recovery device.

Document EP 1884634 A2 discloses a support structure of exhaust system heat exchanger.

### Description of the Invention

A first aspect of the invention relates to a heat recovery system according to claim 1.

One of the main elements of the present heat recovery system is a heat exchanger, whereby the exhaust gas is cooled upon the exchange of heat with the fluid coolant, said coolant in turn therefore being heated, as well as an exhaust duct through which all of the exhaust gas from the internal combustion engine flows in the event that it is not cooled. The hot gas comes from the engine and flows through the exhaust duct, the additional passage thereof through the inside of the heat exchanger being possible for cooling thereof.

The heat recovery system in turn comprises a valve, wherein the flap controlled by the shaft of said valve allows, or not, depending on its arrangement, the passage of the exhaust gas through the heat exchanger, which allows the cooling, or not, of said exhaust gas, and therefore the corresponding heating of the coolant.

This valve is controlled by the actuator which, in this case, is operated based on the behavior with respect to the temperature of a substance contained in said actuator.

The specific volume of said substance changes as a response to the temperature of a fluid with which it is in contact, said fluid being the liquid coolant circulating through the heat exchanger.

The liquid coolant can, interchangeably, exchange heat first with the substance in the internal chamber located inside the actuator, and then with the exhaust gas inside the heat exchanger, or vice versa.

The system according to the first aspect of the invention also comprises:
- *a metallic fluid coupling device, attached at a first fluid inlet*/*outlet by means of welding to the at least one fluid connection of the heat exchanger and at a second fluid outlet*/*inlet to the inlet*/*outlet port of the actuator such that a fluid connection is established between the inlet*/*outlet port of the actuator and the fluid connection of the heat exchanger through the fluid coupling device, and*
*wherein the drive rod of the actuator is connected with the shaft of the valve for the actuation thereof according to the temperature of the liquid coolant.*

The present metallic fluid coupling device is attached to both the heat exchanger and the actuator, such that the liquid coolant is capable of flowing through said metallic fluid coupling device from the heat exchanger to the actuator or vice versa.

Advantageously, the attachment of the heat exchanger and the actuator through the metallic fluid coupling device allows said actuator to fix its position with respect to the exchanger.

In a particular embodiment, the metallic fluid coupling device acts like a structural element and allows supporting the actuator such that the need to incorporate additional parts, for example brackets, which hold the actuator in its position with respect to the heat exchanger, is prevented.

An attachment by means of the metallic fluid coupling device thereby allows reducing the parts that were previously required, thereby resulting in a more lightweight and more compact system.

Additionally, since the fluid coupling device is a metallic device, it allows preventing any risk of deterioration due to the action of high temperatures and heat, unlike the fluid coupling devices of the state of the art, which usually consist of flexible rubber tubing.

In a particular embodiment, the metallic fluid coupling device is manufactured from stamped metal sheet, preferably punched and stamped metal sheet.

According to the invention, said metallic fluid coupling device is configured by a plurality of parts, which allows the fitting between said parts, as well as with the actuator and the heat exchanger, to be even more precise.

Still according to the invention, wherein the metallic fluid coupling device is configured by a plurality of parts, specifically a configuration of two different parts, this device comprises:
- *a first part comprising:*
   - *a first support region;*
   - *a first inner space with a first opening wherein the first opening is peripherally demarcated by the first support region;*
   - *the first fluid inlet*/*outlet of the metallic fluid coupling device;*
- *a second part comprising:*
   - *a second support region;*
   - *a second inner space with a second opening wherein the second opening is peripherally demarcated by the second support region;*
   - *the second fluid outlet*/*inlet of the metallic fluid coupling device;*
*wherein:*
- *the first support region and second support region are attached*
- *the first fluid inlet*/*outlet is in fluid communication with the second inner space,*
- *the second fluid outlet*/*inlet is in fluid communication with the first inner space, and*
- *the first inner space and second inner space are in fluid communication through the first and second openings.*

This particular embodiment alone constitutes a second aspect of the invention which is described in the embodiments as a specific solution applied to the first inventive aspect.

The present configuration allows a direct connection of the exchanger and actuator, and therefore a closed circuit for the coolant, through the attachment of the first part and second part by means of their support regions and the overlapping of the first opening and second opening.

These first and second support regions are, preferably, flat regions which allow their attachment to occur through a common plane defining a contact surface. In turn, the first opening and second opening are areas limiting the first inner space and second inner space, respectively. Said limitation occurs on the plane of each of the support regions, since each of the openings is defined and limited on the plane of each corresponding support region.

Additionally, in a particular example of the second inventive aspect, the attachment of the first support region and second support region is configured as follows:
- before the attachment, the first support region and second support region establish a sliding support with one support region on top of the other support region, such that the first inner space is in fluid communication with the second inner space; and
- after the attachment between the first support region and second support region, the attachment establishes the leak-tight closure of the space generated by the attachment of the first inner space and second inner space and the fluid communication between the first fluid inlet/outlet and second fluid outlet/inlet.

Said sliding support allows the absorption of the necessary tolerances relating to the manufacture and assembly of the present system. After the attachment of said regions, the support generated between both support regions is fixed, the closure being leak-tight and therefore preventing any type of coolant leakage as it passes through the metallic fluid coupling device between the actuator and heat exchanger.

Preferably, the metallic fluid coupling device comprises, between the first support region and second support region, a closed perimeter contact area with an internal passage through which the first inner space communicates with the second inner space.

Said perimeter contact area is contained on the common plane generated from the attachment of both support regions, whereas the internal passage is defined by the overlap existing between the first opening and second opening contained in each of the support regions and peripherally limited by same.

Preferably, the attachment between the first part and second part of the metallic fluid coupling device through the first and second support regions is established by welding.

In a particular example, the first inner space of the first part is concave, the second inner space of the second part is concave, and after the attachment of the first support region and second support region of the metallic fluid coupling device, the concavity of the first inner space is opposite to the concavity of the second inner space.

Said concave inner spaces allow defining a path for the fluid coolant upon the passage thereof through the metallic fluid coupling device, said device thereby being more compact.

Preferably, the space generated by the attachment of the first inner space and second inner space for fluid communication between the openings which allow the entry and exit of the coolant in the metallic fluid coupling device is configured according to a zigzag-type conduit, preferably a tubular zigzag-type conduit, which allows reducing the dimensions of the metallic fluid coupling device.

In a particular embodiment, the inlet/outlet port of the actuator is fluidically connected with the second fluid outlet/inlet of the second part of the metallic fluid coupling device, and wherein the first fluid inlet/outlet of the first part of the metallic fluid coupling device is furthermore fluidically connected with the fluid connection of the heat exchanger.

Additionally, the actuator has a second outlet/inlet port connected to the cooling circuit of the internal combustion engine.

Each of the plates forming the metallic fluid coupling devices is thereby connected with one of the elements of the system, thus forming the circuit through which the coolant circulates.

Therefore, the second part of the device allows supporting the actuator, with the weight being transmitted through the first part of the device, connected with the heat exchanger, which is what supports the remaining parts of the system.

Preferably, the mentioned connections are established by means of welding, more preferably by brazing.

In a particular embodiment, the thermal substance of the actuator is wax, and the rod is in a first position when the temperature of the fluid accessing its interior through its inlet port is at a temperature below a pre-established value, and extends to a second position when the temperature of the fluid accessing its interior through its inlet port exceeds said pre-established value.

A third inventive aspect relates to a method of assembly of a system according to the first inventive aspect, which method comprises carrying out the following steps a) to d) in any order:
a) building the heat exchanger with the fluid connection for the liquid coolant, the exhaust duct, and the valve actuated through a shaft for opening or closing the passage of hot gas;
b) building the actuator with the drive rod and the inlet/outlet port;
c) attaching the fluid connection of the heat exchanger with the metallic fluid coupling device by means of welding;
d) attaching the inlet/outlet port of the actuator with the fluid coupling device by means of welding.

Advantageously, the present method of assembly allows obtaining a compact system, wherein a lower number of parts is needed to form said heat recovery system, which allows said recovery device to occupy less space.

For the particular embodiment in which the metallic fluid coupling device is configured from a first part and second part, the method of assembly is modified as follows:
- step c) comprises attaching the fluid connection of the heat exchanger with the first part of the metallic coupling device by means of welding, and
- step d) comprises attaching the inlet/outlet port of the actuator with the second part of the metallic coupling device by means of welding, and
   wherein the following steps are carried out sequentially after step d):
   e) placing the assembly formed by the heat exchanger and the first part with respect to the second assembly formed by the actuator and the second part such that the first support region of the first part and the second support region of the second part are in sliding contact, and
   f) attaching the first part of the metallic fluid coupling device and the second part of the device.

Particularly, the movement between the first position of the rod and the second position of the rod of the actuator establishes the opening/closing of the valve.

This advantageously enables the additional attachment between both parts of the metallic fluid coupling device to maintain the leak-tightness of said device, while at the same time it enables greater flexibility for absorbing tolerances in the assembly of the system.

Preferably, each of the mentioned attachments is established by means of brazing.

### Description of the Drawings

The foregoing and other features and advantages of the invention will become more apparent based on the following detailed description of a preferred embodiment given only by way of illustrative and non-limiting example in reference to the attached drawings.
Figure 1 shows a diagram of a particular embodiment of the system according to the first inventive aspect.
Figure 2 shows a perspective view of a system according to the second inventive aspect, according to a particular embodiment thereof.
Figures 3A/3B show a front view and section view, respectively, of a system according to the same particular embodiment as Figure 2.
Figures 4A-4B show a perspective view as well as a section view of a particular example of a metallic fluid coupling device.
Figures 4C-4D show a perspective view of each part of the metallic fluid coupling device of Figures 4A and 4B.

### Detailed Description of the Invention

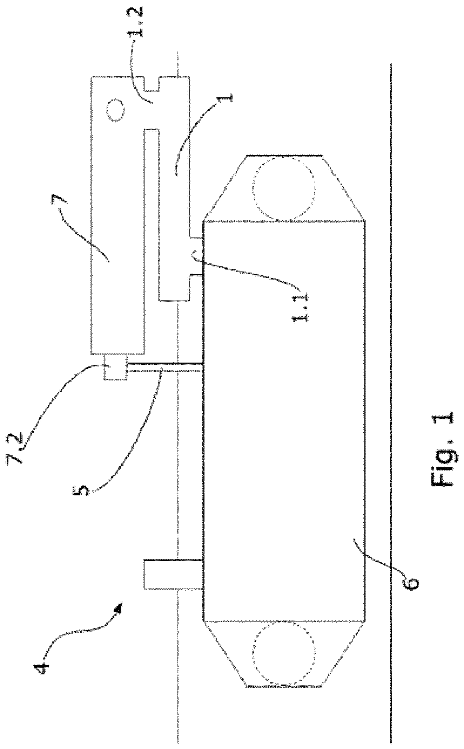

Figure 1 shows a diagram in which a particular example of a system (4) like the one of the first inventive aspect of the present application is defined.

Said system (4) is formed by a tube heat exchanger (6) through which tubes there circulates an exhaust gas coming from the exhaust duct (8), and therefore from the internal combustion engine of the vehicle, as well as an actuator (7) which, by means of a rod (7.2), allows the operation of the shaft (5) of a valve not shown in the present figure. This operation involves the change in position of the flap of the valve, allowing passage of the exhaust gas through the heat exchanger (6) in a first position, such that this may heat up the coolant circulating outside the tubes (while at the same time it is cooled by said coolant), or allowing passage of all of the exhaust gas through the exhaust duct or bypass duct (8) in a second position, thereby preventing the heating of the coolant by said exhaust gas as the latter is expelled directly into the atmosphere.

The attachment between the actuator (7) and the heat exchanger (6) is established through an intermediate element, a metallic fluid coupling device (1), which allows supporting said actuator (7) on the exchanger (6).

In particular, a first fluid inlet/outlet (1.1) of the metallic fluid coupling device (1) is attached to the fluid connection through which the coolant enters/exit the heat exchanger (6), whereas a second fluid outlet/inlet (1.2) of the metallic fluid coupling device (1) is attached to the inlet/outlet port (7.1) through which said coolant enters/exits the actuator (7) .

A closed circuit is thereby formed for the liquid coolant circuit which, in this case, goes from the actuator (7), where it causes the operation of the rod (7.2) by the action of its temperature on the substance of the actuator (7), through the metallic fluid coupling device (1), to the heat exchanger (6), in order to thereby cool the exhaust gas going through the tubes of said exchanger (6).

In an additional particular example, this circuit could be configured in the opposite manner, the liquid coolant thereby flowing from the heat exchanger (6) to the actuator (7).

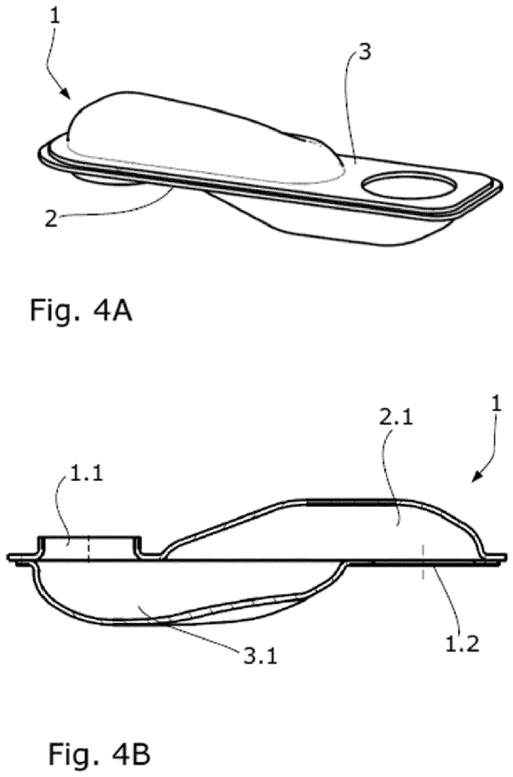

Figure 4A shows a perspective view of a particular example of a metallic fluid coupling device (1), particularly formed by a first part (2) and a second part (3) which are attached to one another through a flat surface of each of the two parts (2, 3), thereby forming an internal path by means of concave cavities in each of these parts (2, 3) which allow the liquid coolant to pass therethrough.

Figure 4B shows a section of this same metallic fluid coupling device (1), wherein the parts (2, 3) comprise a first inner space (2.1, 3.1), respectively, or internal cavity through which the coolant circulates as it passes through the device (1).

The liquid coolant accesses the metallic fluid coupling device (1) through the second fluid inlet (1.2) of the device (1) from the actuator (7), and it exits said device (1) towards the exchanger (6) through the first fluid outlet (1.1). In other words, access of the coolant to the device (1) occurs through the second fluid inlet (1.2) located in the second part (3), in fluid connection with the actuator (7), and its access from the device (1) to the exchanger (6) occurs through the first fluid outlet (1.1) located in the first part (2) forming the device (1).

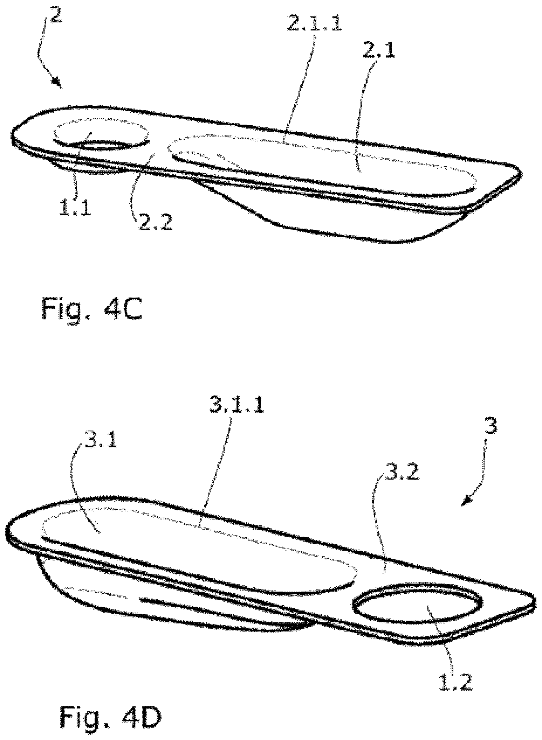

As shown in Figures 4C and 4D, which show a perspective view of each of the parts (2, 3) forming the device (1), each part (2, 3) has a flat support region (2.2, 3.2), respectively. Said attachment of parts (2, 3) is shown in Figures 4A and 4B, being welded to one another by means of brazing to achieve closure of the device (1), thereby preventing leakage of the coolant as it passes through said device (1).

Additionally, Figure 4C shows the first inner space (2.1) of the first part (2), which is demarcated by the first opening (2.1.1).

The first fluid inlet/outlet (1.1) is, in turn, a punched opening on the first part (2).

The first support region (2.2) peripherally demarcates both the first fluid inlet/outlet (1.1) and the first opening (2.1.1).

Similarly, Figure 4D shows the second inner space (3.1) of the second part (3), which is demarcated by the second opening (3.1.1).

The second fluid outlet/inlet (1.2) is, in turn, a punched opening on the second part (3).

The second support region (3.2) peripherally demarcates both the second fluid outlet/inlet (1.2) and the second opening (3.1.1).

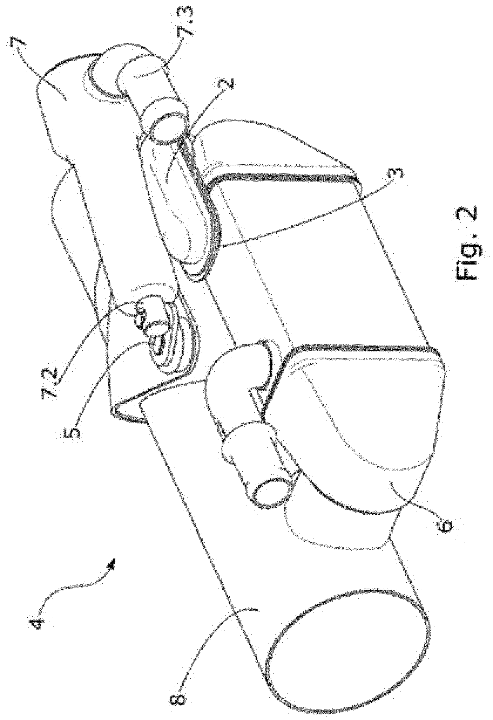

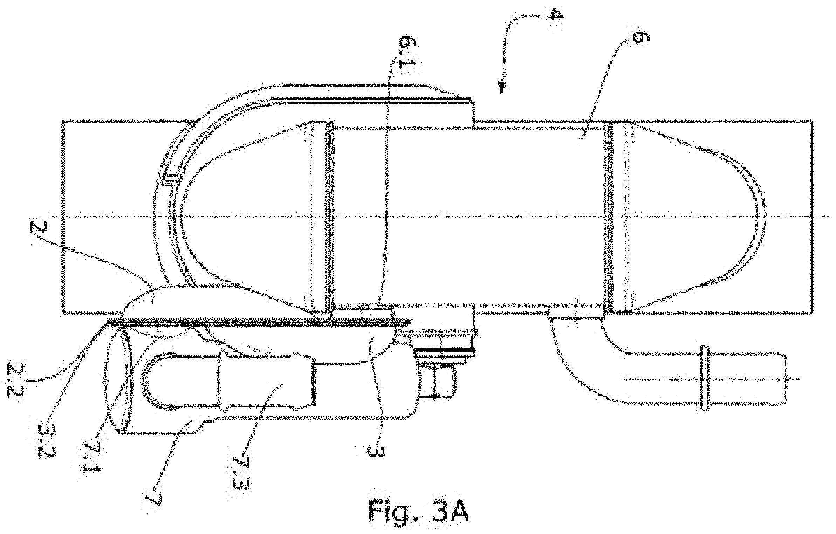

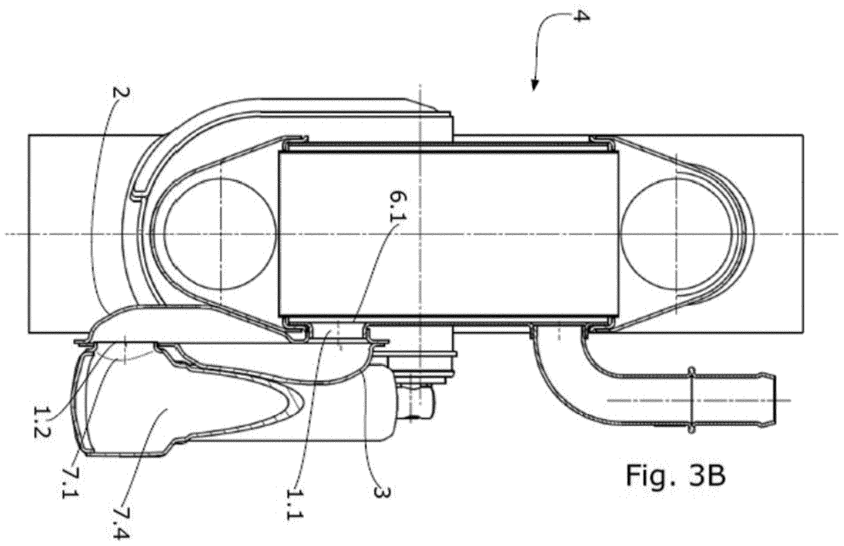

Figures 2, 3A, and 3B show perspective, front, and section views, respectively, of an already assembled complete heat recovery system (4).

In that sense, a tube heat exchanger (6) as well as the adjacent exhaust duct (8) through which the exhaust gas circulates, following the path demarcated by the valve comprised in the system (4), can be seen in said drawings.

An actuator (7) is arranged on the exchanger (6), such that it allows controlling the shaft (5) of the valve which offers access of the exhaust gas to the exchanger (6) itself at all times.

In this particular example, the actuator (7) is a wax actuator, this wax being a substance contained in the internal chamber (7.4) of the actuator (7) which, by means of reacting to the temperature upon contact with the coolant, operates the rod (7.2) on the shaft (5) of the valve.

The fluid connection which allows the passage of the coolant from the exchanger (6) to the actuator (7) is established through the metallic fluid coupling device (1) configured from two parts (2, 3) attached by respective support regions (2.2, 3.2), as can be seen in Figure 3A.

As shown in Figure 3B, the heat exchanger (6) has a fluid connection (6.1) which allows the passage of the fluid coolant, in this case coming from the actuator (7). In order to allow access of said fluid coolant, the actuator (7) has an outlet port (7.1), in connection with the metallic fluid coupling device (1), and in particular with the second part (3) of said device (1), which allows the fluid coolant to flow from the actuator (7) to the device (1), and from the latter to the exchanger (6) through the fluid connection (6.1).

As can be seen in Figure 3B, the outlet port (7.1) is therefore in fluid connection with the second fluid inlet/outlet (1.2) of the device (1), whereas the fluid connection (6.1) is fluidically connected with the first fluid inlet/outlet (1.1) of the device (1).

Figure 3A shows a spigot (7.3) as part of the actuator (7) from which the liquid coolant comes, said spigot (7.3) being fluidically connected with the cooling circuit of the engine (not shown).

## Claims

1. A heat recovery system (4) comprising:
- an exhaust duct (8),
- a heat exchanger (6) for the exchange of heat between a hot gas coming from the exhaust duct (8) and a liquid coolant, comprising at least one fluid connection (6.1) for entry/exit of the liquid coolant,
- a valve actuated through a shaft (5) for opening or closing the passage of hot gas through the heat exchanger (6),
- an actuator (7) comprising a drive rod (7.2) actuated by a substance the specific volume of which changes in the event of changes in temperature, the actuator (7) further comprising:
- an inlet/outlet port (7.1) for the entry/exit of a fluid;
- an internal chamber (7.4) in fluid communication with the inlet/outlet port (7.1) and in thermal communication with the substance such that in operating mode, the substance is in thermal communication with the fluid entering the internal chamber (7.4) through the inlet/outlet port (7.1);
- a metal fluid coupling device (1), attached at a first fluid inlet/outlet (1.1) by means of welding to the at least one fluid connection (6.1) of the heat exchanger (6) and at a second fluid outlet/inlet (1.2) to the inlet/outlet port (7.1) of the actuator (7) such that a fluid connection is established between the inlet/outlet port (7.1) of the actuator (7) and the fluid connection (6.1) of the heat exchanger (6) through the fluid coupling device (1),
wherein the metallic fluid coupling device (1) is made of stamped metal sheet,
wherein the metallic fluid coupling device (1) comprises a plurality of parts, and
wherein the drive rod (7.2) of the actuator (7) is connected with the shaft (5) of the valve for the actuation thereof according to the temperature of the liquid coolant.

2. The heat recovery system (4) according to claim 1, wherein the metallic fluid coupling device (1) is a structural element which supports the actuator (7).

3. The heat recovery system (4) according to any of the preceding claims, wherein the metallic fluid coupling device (1) comprises:
- a first part (2) comprising:
• a first support region (2.2);
• a first inner space (2.1) with a first opening (2.1.1) wherein the first opening (2.1.1) is peripherally demarcated by the first support region (2.2);
• the first fluid inlet/outlet (1.1) of the metallic fluid coupling device (1);
- a second part (3) comprising:
• a second support region (3.2);
• a second inner space (3.1) with a second opening (3.1.1) wherein the second opening (3.1.1) is peripherally demarcated by the second support region (3.2);
• the second fluid outlet/inlet (1.2) of the metallic fluid coupling device (1);
wherein:
- the first support region (2.2) and second support region (3.2) are attached,
- the first fluid inlet/outlet (1.1) is in fluid communication with the second inner space (3.1),
- the second fluid outlet/inlet (1.2) is in fluid communication with the first inner space (2.1), and
- the first inner space (2.1) and second inner space (3.1) are in fluid communication through the first opening (2.1.1) and second opening (3.1.1).

4. The heat recovery system (4) according to claim 3, wherein the attachment of the first support region (2.2) and second support region (3.2) is configured as follows:
- before the attachment, the first support region (2.2) and second support region (3.2) establish a sliding support with one support region (2.2) on top of the other support region (3.2), such that the first inner space (2.1) is in fluid communication with the second inner space (3.1); and
- after the attachment between the first support region (2.2) and second support region (3.2), the attachment establishes the leak-tight closure of the space generated by the attachment of the first inner space (2.1) and second inner space (3.1) and the fluid communication between the first fluid inlet/outlet (1.1) and second fluid outlet/inlet (1.2).

5. The heat recovery system (4) according to any of claims 3 or 4, wherein the first support region (2.2) and second support region (3.2) of the metallic coupling device (1) are flat.

6. The heat recovery system (4) according to any of claims 3 to 5, wherein the first inner space (2.1) of the first part (2) is concave, the second inner space (3.1) of the second part (3) is concave, and after the attachment of the first support region (2.2) and second support region (3.2) of the metallic fluid coupling device (1), the concavity of the first inner space (2.1) is opposite the concavity of the second inner space (3.1).

7. The heat recovery system (4) according to any of claims 3 to 6, wherein the attachment between the first part (2) and second part (3) of the metallic fluid coupling device (1) is made by welding.

8. The heat recovery system (4) according to any of claims 3 to 7, wherein the space generated by the attachment of the first inner space (2.1) and second inner space (3.1) for fluid communication between the first fluid inlet/outlet (1.1) and second fluid outlet/inlet (1.2) of the metallic fluid coupling device (1) is configured according to a zigzag-type conduit.

9. The heat recovery system (4) according to any of claims 3 to 8, wherein the inlet/outlet port (7.1) of the actuator (7) is fluidically connected with the second fluid outlet/inlet (1.2) of the second part (3) of the metallic fluid coupling device (1), and wherein the first fluid inlet/outlet (1.1) of the first part (2) of the metallic fluid coupling device (1) is furthermore fluidically connected with the fluid connection (6.1) of the heat exchanger (6).

10. A method of assembly of a heat recovery system (4) according to any of claims 1 to 9, which method comprises carrying out the following steps a) to d) in any order:
a) building the heat exchanger (6) with the fluid connection (6.1) for the liquid coolant, the exhaust duct (8), and the valve actuated through a shaft (5) for opening or closing the passage of hot gas;
b) building the actuator (7) with the drive rod (7.2) and the inlet/outlet port (7.1);
c) attaching the fluid connection (6.1) of the heat exchanger (6) with the metallic fluid coupling device (1) by means of welding;
d) attaching the inlet/outlet port (7.1) of the actuator (7) with the fluid coupling device (1) by means of welding.

11. The method of assembly according to claim 10 of the heat recovery system (4) according to any of claims 2 to 9, wherein
• step c) comprises attaching the fluid connection (6.1) of the heat exchanger (6) with the first part (2) of the metallic coupling device (1) by means of welding, and
• step d) comprises attaching the inlet/outlet port (7.1) of the actuator (7) with the second part (3) of the metallic coupling device (1) by means of welding, and
wherein the following steps are carried out sequentially after step d):
e) placing the assembly formed by the heat exchanger (6) and the first part (2) with respect to the second assembly formed by the actuator (7) and the second part (3) such that the first support region (2.2) of the first part (2) and the second support region (3.2) of the second part (3) are in sliding contact,
f) attaching the first part (2) of the metallic fluid coupling device (1) and the second part (3) of the device.

12. The method of assembly according to any of claims 10 or 11, wherein the attachments are established by means of brazing.

## Patentansprüche

1. Wärmerückgewinnungssystem (4) mit:
- einem Abgaskanal (8);
- einem Wärmetauscher (6) für den Wärmeaustausch zwischen einem vom Abgaskanal (8) zuströmenden heißen Gas und einem flüssigen Kühlmittel, mit mindestens einem Fluidanschluss (6.1) für den Eintritt/Austritt des flüssigen Kühlmittels;
- einem durch eine Welle (5) betätigten Ventil zum Öffnen oder Schließen des Durchgangs eines heißen Gases durch den Wärmetauscher (6);
- einem Aktuator (7) mit einer Antriebsstange (7.2), die durch eine Substanz betätigt wird, deren spezifisches Volumen sich bei einer Temperaturänderung ändert, wobei der Aktuator (7) ferner aufweist:
- eine Einlass-/Auslassöffnung (7.1) für den Eintritt/Austritt eines Fluids;
- eine innere Kammer (7.4), die in Fluidverbindung mit der Einlass-/Auslassöffnung (7.1) und in thermischer Verbindung mit der Substanz steht, so dass die Substanz in einem Betriebsmodus in thermischer Verbindung mit dem Fluid steht, das über die Einlass-/Auslassöffnung (7.1) in die innere Kammer (7.4) eintritt;
- eine metallische Fluidkopplungseinrichtung (1), die an einem ersten Fluideinlass/-auslass (1.1) durch Anschweißen an dem mindestens einen Fluidanschluss (6.1) des Wärmetauschers (6) und an einem zweiten Fluidauslass/-einlass (1.2) an der Einlass-/Auslassöffnung (7.1) des Aktuators (7) befestigt ist, so dass durch die Fluidkopplungseinrichtung (1) eine Fluidverbindung zwischen der Einlass-/Auslassöffnung (7.1) des Aktuators (7) und dem Fluidanschluss (6.1) des Wärmetauschers (6) hergestellt wird,
wobei die metallische Fluidkopplungseinrichtung (1) aus gestanztem Metallblech hergestellt ist,
wobei die metallische Fluidkopplungseinrichtung (1) mehrere Teile aufweist, und
wobei die Antriebsstange (7.2) des Aktuators (7) mit der Welle (5) des Ventils für dessen Betätigung gemäß der Temperatur des flüssigen Kühlmittels verbunden ist.

2. Wärmerückgewinnungssystem (4) nach Anspruch 1, wobei die metallische Fluidkopplungseinrichtung (1) ein strukturelles Element ist, das den Aktuator (7) stützt.

3. Wärmerückgewinnungssystem (4) nach einem der vorangehenden Ansprüche, wobei die metallische Fluidkopplungseinrichtung (1) aufweist:
• ein erstes Teil (2) mit:
- einem ersten Stützbereich (2.2);
- einem ersten Innenraum (2.1) mit einer ersten Öffnung (2.1.1), wobei die erste Öffnung (2.1.1) am Umfang durch den ersten Stützbereich (2.2) abgegrenzt ist;
- dem ersten Fluideinlass/-auslass (1.1) der metallischen Fluidkopplungseinrichtung (1);
• ein zweites Teil (3) mit:
- einem zweiten Stützbereich (3.2);
- einem zweiten Innenraum (3.1) mit einer zweiten Öffnung (3.1.1), wobei die zweite Öffnung (3.1.1) am Umfang durch den zweiten Stützbereich (3.2) abgegrenzt ist;
- dem zweiten Fluideinlass/-auslass (1.2) der metallischen Fluidkopplungseinrichtung (1),
wobei:
- der erste Stützbereich (2.2) und der zweite Stützbereich (3.2) aneinander befestigt sind,
- der erste Fluideinlass/-auslass (1.1) in Fluidverbindung mit dem zweiten Innenraum (3.1) steht,
- der zweite Fluidauslass/-einlass (1.2) in Fluidverbindung mit dem ersten Innenraum (2.1) steht, und
- der erste Innenraum (2.1) und der zweite Innenraum (3.1) durch die erste Öffnung (2.1.1) und die zweite Öffnung (3.1.1) in Fluidverbindung stehen.

4. Wärmerückgewinnungssystem (4) nach Anspruch 3, wobei das Befestigen des ersten Stützbereichs (2.2) und des zweiten Stützbereichs (3.2) wie folgt konfiguriert ist:
vor dem Befestigen stellen der erste Stützbereich (2.2) und der zweite Stützbereich (3.2) eine gleitende Abstützung mit dem einen Stützbereich (2.2) auf dem anderen Stützbereich (3.2) derart her, dass der erste Innenraum (2.1) in Fluidverbindung mit dem zweiten Innenraum (3.1) steht; und
nach dem Befestigen des ersten Stützbereichs (2.2) und des zweiten Stützbereichs (3.2) aneinander wird durch das Befestigen der leckdichte Abschluss des Raums hergestellt, der durch das Befestigen des ersten Innenraums (2.1) und des zweiten Innenraums (3.1) und die Fluidverbindung zwischen dem ersten Fluideinlass/-auslass (1.1) und dem zweiten Fluidauslass/-einlass (1.2) erzeugt wird.

5. Wärmerückgewinnungssystem (4) nach Anspruch 3 oder 4, wobei der erste Stützbereich (2.2) und der zweite Stützbereich (3.2) der metallischen Fluidkopplungseinrichtung (1) flach sind.

6. Wärmerückgewinnungssystem (4) nach einem der Ansprüche 3 bis 5, wobei der erste Innenraum (2.1) des ersten Teils (2) konkav ausgebildet ist, der zweite Innenraum (3.1) des zweiten Teils (3) konkav ausgebildet ist, und wobei nach dem Befestigen des ersten Stützbereichs (2.2) und des zweiten Stützbereichs (3.2) der metallischen Fluidkopplungseinrichtung (1) die Konkavität des ersten Innenraums (2.1) der Konkavität des zweiten Innenraums (3.1) entgegengesetzt ist.

7. Wärmerückgewinnungssystem (4) nach einem der Ansprüche 3 bis 6, wobei die Befestigung zwischen dem ersten Teil (2) und dem zweiten Teil (3) der metallischen Fluidkopplungseinrichtung (1) durch Schweißen hergestellt wird.

8. Wärmerückgewinnungssystem (4) nach einem der Ansprüche 3 bis 7, wobei der durch das Befestigen des ersten Innenraums (2.1) und des zweiten Innenraums (3.1) erzeugte Raum für eine Fluidkommunikation zwischen dem ersten Fluideinlass/-auslass (1.1) und dem zweiten Fluidauslass/-einlass (1.2) der metallischen Fluidkopplungseinrichtung (1) gemäß einem zickzackförmigen Kanal konfiguriert ist.

9. Wärmerückgewinnungssystem (4) nach einem der Ansprüche 3 bis 8, wobei die Einlass-/Auslassöffnung (7.1) des Aktuators (7) mit dem zweiten Fluidauslass/- einlass (1.2) des zweiten Teils (3) der metallischen Fluidkopplungseinrichtung (1) fluidtechnisch verbunden ist, und wobei der erste Fluideinlass/-auslass (1.1) des ersten Teils (2) der metallischen Fluidkopplungseinrichtung (1) ferner mit dem Fluidanschluss (6.1) des Wärmetauschers (6) fluidtechnisch verbunden ist.

10. Verfahren zum Montieren eines Wärmerückgewinnungssystems (4) nach einem der Ansprüche 1 bis 9, wobei das Verfahren das Ausführen der folgenden Schritte a) bis d) in einer beliebigen Reihenfolge aufweist:
a) Bauen des Wärmetauschers (6) mit dem Fluidanschluss (6.1) für das flüssige Kühlmittel, der Abgasleitung (8) und dem über eine Welle (5) betätigten Ventil zum Öffnen oder Schließen des Durchgangs von heißem Gas;
b) Bauen des Aktuators (7) mit der Antriebsstange (7.2) und der Einlass-/Auslassöffnung (7.1);
c) Befestigen des Fluidanschlusses (6.1) des Wärmetauschers (6) an der metallischen Fluidkopplungseinrichtung (1) durch Schweißen;
d) Befestigen der Einlass-/Auslassöffnung (7.1) des Aktuators (7) an der Fluidkopplungseinrichtung (1) durch Schweißen.

11. Verfahren nach Anspruch 10 zum Montieren des Wärmerückgewinnungssystems (4) nach einem der Ansprüche 2 bis 9, wobei
• Schritt c) das Befestigen des Fluidanschlusses (6.1) des Wärmetauschers (6) am ersten Teil (2) der metallischen Fluidkopplungseinrichtung (1) durch Schweißen aufweist; und
• Schritt d) das Befestigen der Einlass-/Auslassöffnung (7.1) des Aktuators (7) am zweiten Teil (3) der metallischen Fluidkopplungseinrichtung (1) durch Schweißen aufweist, und
wobei die folgenden Schritte nach Schritt d) nacheinander ausgeführt werden:
e) Anordnen der durch den Wärmetauscher (6) und das erste Teil (2) gebildeten Baugruppe in Bezug auf die aus dem Aktuator (7) und dem zweiten Teil (3) gebildete zweite Baugruppe, so dass der erste Stützbereich (2.2) des ersten Teils (2) und der zweite Stützbereich (3.2) des zweiten Teils (3) in Gleitkontakt stehen; und
f) Befestigen des ersten Teils (2) der metallischen Fluidkopplungseinrichtung (1) und des zweiten Teils (3) der Fluidkopplungseinrichtung aneinander.

12. Verfahren nach einem der Ansprüche 10 oder 11, wobei die Befestigungen durch Löten hergestellt werden.

## Revendications

1. Un système (4) de récupération de chaleur comprenant:
- un conduit d'échappement (8),
- un échangeur de chaleur (6) pour l'échange de chaleur entre un gaz chaud provenant du conduit d'échappement (8) et un liquide caloporteur, comprenant au moins un raccord de fluide (6.1) pour l'entrée/la sortie du liquide caloporteur,
- une vanne actionnée par un arbre (5) pour ouvrir ou fermer le passage des gaz chauds à travers l'échangeur de chaleur (6),
- un actionneur (7) comprenant une tige d'entraînement (7.2) actionnée par une substance dont le volume spécifique change en cas de variations de température, l'actionneur (7) comprenant en outre:
- un orifice d'entrée/sortie (7.1) pour l'entrée/la sortie d'un fluide;
- une chambre interne (7.4) en communication fluidique avec l'orifice d'entrée/sortie (7.1) et en communication thermique avec la substance de telle sorte qu'en mode de fonctionnement, la substance soit en communication thermique avec le fluide entrant dans la chambre interne (7.4) par l'orifice d'entrée/sortie (7.1) ;
- un dispositif en métal (1) de liaison de fluide, fixé, à une première entrée/sortie de fluide (1.1), par soudage, audit au moins un raccord de fluide (6.1) de l'échangeur de chaleur (6), et, à une deuxième sortie/entrée de fluide (1.2), à l'orifice d'entrée/sortie (7.1) de l'actionneur (7) de telle sorte qu'une connexion fluidique soit établie entre l'orifice d'entrée/sortie (7.1) de l'actionneur (7) et le raccord de fluide (6.1) de l'échangeur de chaleur (6) via le dispositif (1) de liaison de fluide,
le dispositif métallique (1) de liaison fluidique étant réalisé en tôle emboutie,
le dispositif métallique (1) de liaison fluidique comprenant une pluralité de parties, et
la tige d'entraînement (7.2) de l'actionneur (7) étant reliée à l'arbre (5) de la vanne pour l'actionnement de celle-ci en fonction de la température du liquide caloporteur.

2. Le système (4) de récupération de chaleur selon la revendication 1, dans lequel le dispositif métallique (1) de liaison fluidique est un élément structurel qui supporte l'actionneur (7).

3. Le système (4) de récupération de chaleur selon l'une quelconque des revendications précédentes, dans lequel le dispositif métallique (1) de liaison fluidique comprend:
- une première partie (2) comprenant:
• une première zone de support (2.2);
• un premier espace interne (2.1) avec une première ouverture (2.1.1), la première ouverture (2.1.1) étant délimitée de façon périphérique par la première zone de support (2.2);
• la première entrée/sortie de fluide (1.1) du dispositif métallique (1) de liaison fluidique;
- une deuxième partie (3) comprenant:
• une deuxième zone de support (3.2);
• un deuxième espace interne (3.1) avec une deuxième ouverture (3.1.1), la deuxième ouverture (3.1.1) étant délimitée de façon périphérique par la deuxième zone de support (3.2);
• la deuxième sortie/entrée de fluide (1.2) du dispositif métallique (1) de liaison fluidique;
- la première zone de support (2.2) et la deuxième zone de support (3.2) sont rapportées,
- la première entrée/sortie de fluide (1.1) est en communication fluidique avec le deuxième espace interne (3.1),
- la deuxième sortie/entrée de fluide (1.2) est en communication fluidique avec le premier espace interne (2.1), et
- le premier espace interne (2.1) et le deuxième espace interne (3.1) sont en communication fluidique via la première ouverture (2.1.1) et la deuxième ouverture (3.1.1).

4. Le système (4) de récupération de chaleur selon la revendication 3, dans lequel la fixation de la première zone de support (2.2) et de la deuxième zone de support (3.2) est configurée comme suit:
- avant la fixation, la première zone de support (2.2) et la deuxième zone de support (3.2) établissent un support coulissant avec une zone de support (2.2) située sur le dessus de l'autre zone de support (3.2), de sorte que le premier espace interne (2.1) est en communication fluidique avec le deuxième espace interne (3.1); et
- après la fixation entre la première zone de support (2.2) et la deuxième zone de support (3.2), la fixation établit une fermeture étanche de l'espace généré par la fixation du premier espace interne (2.1) et du deuxième espace interne (3.1) et la communication fluidique entre la première entrée/sortie de fluide (1.1) et la deuxième sortie/entrée de fluide (1.2).

5. Le système (4) de récupération de chaleur selon l'une quelconque des revendications 3 ou 4, dans lequel la première zone de support (2.2) et la deuxième zone de support (3.2) du dispositif métallique (1) de liaison sont plates.

6. Le système (4) de récupération de chaleur selon l'une quelconque des revendications 3 à 5, dans lequel le premier espace interne (2.1) de la première partie (2) est concave, le deuxième espace interne (3.1) de la deuxième partie (3) est concave, et, après la fixation de la première zone de support (2.2) et de la deuxième zone de support (3.2) du dispositif métallique (1) de liaison fluidique, la concavité du premier espace interne (2.1) est opposée à la concavité du deuxième espace interne (3.1).

7. Le système (4) de récupération de chaleur selon l'une quelconque des revendications 3 à 6, dans lequel la fixation entre la première partie (2) et la deuxième partie (3) du dispositif en métal (1) de liaison de fluide est réalisée par soudage.

8. Le système (4) de récupération de chaleur selon l'une quelconque des revendications 3 à 7, dans lequel l'espace généré par la fixation du premier espace interne (2.1) et du deuxième espace interne (3.1) pour la communication fluidique entre la première entrée/sortie de fluide (1.1) et une deuxième sortie/entrée de fluide (1.2) du dispositif métallique (1) de liaison fluidique est configuré en tant que conduit de type zigzag.

9. Le système (4) de récupération de chaleur selon l'une quelconque des revendications 3 à 8, dans lequel l'orifice d'entrée/sortie (7.1) de l'actionneur (7) est relié de façon fluidique à la deuxième sortie/entrée de fluide (1.2) de la deuxième partie (3) du dispositif métallique (1) de liaison de fluide, et dans lequel la première entrée/sortie de fluide (1.1) de la première partie (2) du dispositif métallique (1) de liaison de fluide est en outre reliée de façon fluidique au raccord de fluide (6.1) de l'échangeur de chaleur (6).

10. Un procédé d'assemblage d'un système (4) de récupération de chaleur selon l'une quelconque des revendications 1 à 9, lequel procédé comprend la mise en œuvre des étapes a) à d) suivantes dans n'importe quel ordre:
a) construire l'échangeur de chaleur (6) avec le raccord de fluide (6.1) pour le liquide caloporteur, le conduit d'échappement (8), et la vanne actionnée par un arbre (5) pour ouvrir ou fermer le passage des gaz chauds;
b) construire l'actionneur (7) avec la tige d'entraînement (7.2) et l'orifice d'entrée/sortie (7.1);
c) fixer par soudage le raccord de fluide (6.1) de l'échangeur de chaleur (6) au dispositif métallique (1) de liaison fluidique;
d) fixer par soudage l'orifice d'entrée/sortie (7.1) de l'actionneur (7) au dispositif (1) de liaison de fluide.

11. Le procédé d'assemblage selon la revendication 10 du système (4) de récupération de chaleur selon l'une quelconque des revendications 2 à 9, dans lequel
• l'étape c) comprend le fait de fixer par soudage le raccord de fluide (6.1) de l'échangeur de chaleur (6) à la première partie (2) du dispositif métallique (1) de liaison, et
• l'étape d) comprend le fait de fixer par soudage l'orifice d'entrée/sortie (7.1) de l'actionneur (7) à la deuxième partie (3) du dispositif métallique (1) de liaison, et
les étapes suivantes étant mises en œuvre séquentiellement après l'étape d):
e) le fait de placer l'ensemble formé par l'échangeur de chaleur (6) et la première partie (2) par rapport au deuxième ensemble formé par l'actionneur (7) et la deuxième partie (3) de telle sorte que la première zone de support (2.2) de la première partie (2) et la deuxième zone de support (3.2) de la deuxième partie (3) soient en contact glissant,
f) le fait de fixer la première partie (2) du dispositif métallique (1) de liaison de fluide et la deuxième partie (3) du dispositif.

12. Le procédé d'assemblage selon l'une quelconque des revendications 10 ou 11, dans lequel les fixations sont établies au moyen de brasage.
